# DEMANDE DE BREVET EUROPEEN

(11) **EP 2 382 861 A1**
(43) Date de publication de la demande: **02.11.2011**
(21) Numéro de dépôt: 10161486.5
(22) Date de dépôt: 29.04.2010
(51) Int. Cl.: A01G 9/02

(54) **Pot horticole à biodégradabilité différentielle**

(71) Demandeur: Green Planet, 13016 Marseille (FR); Bardon, Dominique, 83700 Saint Raphaël (FR)
(72) Inventeur: Bardon, Dominique, 83700, SAINT RAPHAEL (FR); Richardier, Pierre, 06160, ANTIBES JUAN LES PINS (FR)
(74) Mandataire: Domange, Maxime

(57) **Abrégé**

L'invention concerne un pot horticole à biodégradabilité différentielle comprenant un fond (1) et une paroi latérale (2), le pot comprenant au moins deux zones à capacité de biodégradabilité différentes, une zone dite de biodégradabilité majeure (11a,11b,11c) et une zone de biodégradabilité mineure (T1,T2,T3), la forme et la situation de la zone de biodégradabilité majeure (11a,11b,11c) sur le pot étant telles que la zone de biodégradabilité majeure (11a,11b,11c) constitue, après dégradation, un ou plusieurs orifices ouverts dans le pot, la situation de ces orifices par rapport au pot étant adaptée à la croissance des racines et la forme et la situation de la zone de biodégradabilité mineure (T1,T2,T3) sur le pot étant telles que la zone de biodégradabilité mineure (T1,T2,T3) assure la tenue mécanique du pot après dégradation de la zone de biodégradabilité majeure (11a,11b,11c).

## Description

### Arrière-plan de l'invention

La présente invention se rapporte au domaine général des pots horticoles biodégradables. Les pots horticoles comprennent, de manière classique, un fond et une paroi latérale s'étendant, à partir du fond vers le haut.

Il existe aujourd'hui de nombreux types de pots biodégradables réalisés à partir de matériaux biodégradables divers. Les matériaux utilisés peuvent être à base de papier recyclé, de fibres de bois, ou encore à base d'amidon de blé, de pomme de terre, de maïs etc... L'utilisation des amidons est avantageuse car elle permet l'obtention de pots par injection de matière dans un moule. Les pots obtenus ont en outre l'aspect d'un pot réalisé en matière plastique ce qui contribue à une présentation esthétique du produit végétal final.

L'utilisation de pots biodégradables est de plus en plus répandue pour permettre aux personnes souhaitant planter directement un végétal acheté en jardinerie. Le pot contenant le végétal est alors placé en terre sans obligation de dépoter le végétal préalablement.

Dans ce cas, la biodégradabilité du pot permet la disparition de celui-ci dans la terre par action de l'environnement naturel sur le matériau qui le constitue.

En l'occurrence, la biodégradabilité dépend de quatre facteurs au-delà de la composition même du matériau biodégradable. Ces facteurs comprennent principalement l'humidité du contenant et/ou de l'environnement, la température ambiante, l'exposition aux ultraviolets, l'action des microorganismes présents dans le contenant ou dans l'environnement et l'action des produits ajoutés dans le contenant et/ou à l'extérieur de celui-ci, que ce soit des engrais, des hormones, etc... Les contraintes mécaniques pendant les manipulations peuvent également contribuer à l'évolution de la biodégradabilité.

Néanmoins, il a été constaté que l'utilisation de tels pots horticoles reste limitée dans la mesure où ils ne permettent pas de stocker très longtemps des végétaux dans les rayonnages d'une jardinerie ou d'une pépinière.

En effet, dans le cas d'un stockage sur une durée importante, la dégradation des pots opère et il peut s'avérer que les pots deviennent intransportables. Il est alors nécessaire, pour la jardinerie, de rempoter les végétaux concernés afin de permettre leur vente. Cela représente des couts non négligeables en matériau et surtout en main d'oeuvre que souhaitent éviter les pépiniéristes.

Ainsi, la nécessité de rempoter les végétaux est une contrainte qui est généralement rejetée par les surfaces de vente et cela réduit, de manière importante, l'utilisation des pots biodégradables qui sont généralement destinés aux petites cultures ayant un cycle de vente très rapide.

Actuellement, l'utilisation de pots biodégradables pour la vente de végétaux de tailles importantes ou, plus généralement, de végétaux ayant un cycle de vente assez long, n'est pas rentable.

On remarque par ailleurs que le caractère biodégradable ne concerne généralement aujourd'hui que les pots utilisés pour la vente et la plantation. En phase de culture du végétal et de sa présentation, l'utilisation de pots biodégradables est, en général, écartée pour les raisons évoquées au-dessus, à savoir la difficulté de contrôler dans le temps la biodégradabilité ou biofragmentation. Le contrôle de la biodégradabilité sur l'ensemble du cycle d'utilisation d'un pot horticole est en effet très délicat et cela d'autant plus si ce cycle inclut une phase de culture.

### Objet et résumé de l'invention

La présente invention a donc pour but principal de palier les inconvénients des pots biodégradables connus en proposant un pot horticole à biodégradabilité différentielle comprenant un fond et une paroi latérale, le pot comprenant au moins deux zones à capacité de biodégradabilité différentes, une zone dite de biodégradabilité majeure et une zone de biodégradabilité mineure, la forme et la situation de la zone de biodégradabilité majeure sur le pot étant telles que la zone de biodégradabilité majeure constitue, après dégradation, un ou plusieurs orifices ouverts dans le pot, la situation de ces orifices par rapport au pot étant adaptée à la croissance des racines et la forme et la situation de la zone de biodégradabilité mineure sur le pot étant telles que la zone de biodégradabilité mineure assure la tenue mécanique du pot après dégradation de la zone de biodégradabilité majeure.

Un tel pot permet de cumuler les avantages de la biodégradabilité pour la croissance du végétal qu'il contient et une bonne tenue mécanique du pot assurée sur une période étendue.

En effet, selon l'invention, l'ensemble du pot horticole est biodégradable mais les propriétés mécaniques des différentes zones, se dégradant de manière différentielle, l'invention autorise le maintien d'une tenue mécanique correcte du pot sur une durée élargie tout en permettant des caractéristiques de biodégradabilité telles qu'actuellement observées dans les pots biodégradables connus pour ce qui concerne les racines du végétal. La présence de certaines zones à dégradation rapide situées spécifiquement pour former des orifices permet l'extension des racines à l'extérieur du pot avant que celui-ci ne soit entièrement biodégradé.

L'invention assure ainsi une bonne aération du système racinaire contribuant à la santé et au bon développement des végétaux, en particulier l'utilisation de tels pots permet rapidement une importante ramification des racines et donc une excellente reprise du plan. En outre, on autorise que les racines ne forment pas de chignon et le végétal se développe donc en l'absence de déformation racinaire.

Selon une première réalisation, les zones de biodégradabilités différentes sont différenciées par des matériaux de compositions biodégradables distinctes.

L'utilisation de matériaux de compositions biodégradables distinctes permet de réaliser un pot ayant une épaisseur constante comme cela est le cas dans les pots actuels. Les matériaux utilisés pourront être des matériaux de bases distinctes ou des matériaux de même base mais contenant des charges distinctes et présentant donc des compositions distinctes.

Néanmoins, cette réalisation implique généralement une certaine complexité dans la fabrication du pot puisqu'il est nécessaire, soit d'injecter deux matériaux distincts pour fabriquer un pot soit de procéder à un assemblage de deux parties de pot, par exemple un fond et une paroi latérale, ces deux éléments étant injectés de manière séparée. L'assemblage pourra être réalisé à l'aide, par exemple, d'un clip ou de tout autre moyen à la disposition de l'homme du métier pour maintenir l'élément fond du pot solidaire avec l'élément paroi latérale. Cette dernière réalisation demande de la main-d'oeuvre pour procéder au montage des pots. Dans le cas où une bi-injection est réalisée, on comprend bien que le dispositif nécessaire à mise en place du processus de fabrication des pots sera plus complexe et, donc, plus couteux.

Selon une caractéristique préférentielle de l'invention, les zones de biodégradabilités différentes sont différenciées par des épaisseurs différentes d'un même matériau biodégradable, la zone de biodégradabilité majeure présentant alors une épaisseur moins importante que la zone de biodégradabilité mineure.

Avec cette réalisation, il est seulement nécessaire de fabriquer un moule dans lequel un même, seul et unique, matériau est injecté pour fabriquer des pots horticoles selon l'invention. Cette réalisation préférentielle revêt donc un caractère de simplicité qui est particulièrement important dans la mesure où le coût d'un pot horticole doit, très préférentiellement, rester mineur par rapport au coût du produit final vendu qui est le végétal en pot.

Selon une caractéristique préférentielle, la paroi latérale est une zone de biodégradabilité mineure.

Cette caractéristique permet que le pot horticole conserve un bel aspect extérieur sur sa partie visible par un acheteur. Cela est effectivement toujours le cas même si les zones de biodégradabilité majeure, qui sont donc situées au niveau du fond du pot, ont commencé à se dégrader.

En outre, l'ouverture du pot par le fond offre un nouvel espace naturel vers lequel les racines croissent naturellement, c'est-à-dire vers le bas.

Typiquement, une telle réalisation pourra être réalisée avec deux éléments fond et paroi latérale assemblés ensemble. Une bi-injection de matériaux de compositions distinctes sur le haut et sur le bas du pot pourra aussi être tout à fait adaptée.

Selon une caractéristique avantageuse, le fond comprend au moins deux zones de biodégradabilités différentes, la forme de la zone de biodégradabilité mineure sur le fond du pot et ses liaisons avec la paroi latérale assurant la tenue mécanique du pot.

La présence sur le fond du pot de deux zones de biodégradabilité différentes est particulièrement avantageuse dans la mesure où, dans ce cas, le ou les orifice(s) ouvert(s) dans le fond du pot par dégradation de la zone de biodégradabilité majeure permet(tent) le passage des racines de manière naturelle pour la plante.

En outre, la forme de la zone de biodégradabilité mineure sur le fond du pot et la situation de cette zone de biodégradabilité mineure par rapport à la paroi latérale est telle qu'elle assure une liaison avec celle-ci pour donner la tenue mécanique. Une telle tenue mécanique permet qu'il soit toujours possible d'attraper le pot par sa paroi latérale. En effet, dans ce cas, même si une partie du fond du pot est dégradée, un acheteur pourra attraper et transporter le pot contenant le végétal sans désagrément.

Selon une caractéristique avantageuse, la zone de biodégradabilité mineure est en outre décalée au dessus de la zone de biodégradabilité majeure pour former des trajets d'écoulement de l'eau au niveau du fond du pot.

Cette caractéristique permet de reproduire la forme habituelle des pots vendus dans le commerce, à savoir des pots comprenant des trajets d'écoulement de l'eau qui ne sont pas au contact de la surface sur laquelle est posé le pot. En revanche, selon l'invention, cette forme habituelle devient fonctionnelle. En effet les zones entre les trajets sont alors des zones de biodégradabilité majeure qui vont se détériorer laissant les trajets, plus épais, permettre d'assurer la tenu du pot.

L'utilisation de tels trajets pour y situer la zone de biodégradabilité mineure est particulièrement intéressante dans la mesure où les zones de biodégradabilité mineures sur le fond du pot constituent alors un squelette sur le fond du pot qui permet d'assurer au pot sa tenue mécanique. Ce squelette a donc deux fonctions combinées puisqu'il permet aussi un écoulement correct de l'eau au niveau du fond du pot.

Avantageusement, la zone de biodégradabilité mineure comprend plusieurs trajets en croix ou en étoiles autour d'au moins un point central, ces trajets s'étendant entre le point central et la paroi latérale.

Une telle forme en croix ou en étoile permet d'assurer, précisément, une tenue mécanique du pot correcte en reliant plusieurs points de la paroi latérale par la zone de biodégradabilité mineure. Ces trajets suivent en fait des lignes de contraintes importantes quand on saisit le pot par sa paroi latérale. En outre ils reprennent une forme habituelle des pots connus et cela permet que l'utilisateur ne soit pas dérouté par l'implémentation de l'invention.

Selon des caractéristiques particulières de l'invention, la zone de biodégradabilité mineure comprend en outre un disque autour du point central.

Une telle forme est connue pour les trajets d'écoulement de l'eau mais est donc exploitée, selon l'invention, de manière particulièrement intéressante puisque le disque central donne une rigidité accrue au fond du pot tout en permettant l'ouverture des orifices entre les trajets.

Selon une caractéristique particulière, le point central étant unique, la zone de biodégradabilité mineure comprend en outre une portion annulaire intersectant les trajets et entourant le point central.

La présence d'une portion annulaire est inhabituelle dans les pots actuels. Elle permet de donner une meilleure tenue mécanique au fond du pot même en présence de dégradation des zones de biodégradabilité majeure. Une telle forme originale des trajets d'écoulement d'eau est particulièrement intéressante pour les pots de taille importante où la distance entre le centre du fond du pot et la paroi latérale est importante.

Selon une autre caractéristique particulière, la zone de biodégradabilité mineure comprend plusieurs points centraux reliés par des trajets formant une structure en grille reliée à la paroi latérale.

Une telle structure en grille permet de quadriller le fond du pot avec des trajets rectilignes tout en assurant des ouvertures régulièrement réparties pour laisser passer les racines. Les racines ont alors toute liberté de sortir par les orifices dans cette grille et poursuivre leur croissance une fois que le pot a été planté.

Dans l'attente de cette plantation, le pot conserve néanmoins une bonne structure mécanique dans la mesure où la grille permet de relier différents points du bas de la paroi latérale, ce qui assure que la terre qui est généralement compactée dans les pots horticoles ne tombe pas du pot de manière trop importante.

Cela est adapté en particulier pour les pots de grande taille où la terre sera alors maintenue grâce au tracé de la grille qui structure fortement le fond du pot.

En outre une telle structure en grille est parfaitement adaptée à un écoulement correct de l'eau au niveau du fond du pot.

Selon une caractéristique particulière, la paroi latérale comprend au moins deux zones de biodégradabilités différentes, la forme de la zone de biodégradabilité mineure et ses liaisons par rapport au fond étant telles que la zone de biodégradabilité mineure assure la tenue mécanique du pot.

Cette caractéristique permet d'ouvrir des orifices sur la paroi latérale du pot. Cela peut s'avérer utile pour certains types de végétaux même si cela n'est pas idéal d'un point de vue de la conservation d'un bel aspect extérieur visible.

Avec cette caractéristique, on autorise que la paroi latérale présente aussi une biodégradabilité différentielle, cette biodégradabilité de la paroi latérale peut être implémentée seule ou en même temps qu'une biodégradabilité différentielle du fond du pot.

Dans une réalisation particulière de l'invention, le pot comprend plusieurs zones sensiblement cylindriques ou coniques successives, ces zones étant de biodégradabilités différentes et formant la paroi latérale.

Une telle réalisation est avantageusement utilisée pour échelonner la dégradation du pot dans le temps.

Avantageusement, la biodégradabilité des zones diminue du fond vers le haut du pot.

Cela permet une dégradation du pot du bas vers le haut. C'est ce qui est en général précisément recherché lors de plantation directe du végétal avec le pot.

En particulier, un pot horticole, selon l'invention, peut comprendre une zone de biodégradabilité majeure sur le fond du pot permettant d'ouvrir plusieurs orifices sur le fond du pot. Avantageusement, la biodégradabilité mineure du fond du pot est équivalente à celle d'une zone de biodégradabilité majeure sur les parois latérales. Cela assure la dégradation totale du fond du pot, d'abord au niveau des orifices, puis au niveau des zones de biodégradabilité mineure du fond du pot en même temps que la zone la plus basse de biodégradabilité majeure de la paroi latérale. Le reste de la paroi latérale se dégrade ensuite dans le temps de bas en haut. Cette réalisation permet en particulier que la dernière partie du pot horticole restante soit la collerette supérieure du pot horticole.

On note ici que les zones de biodégradabilité mineure du fond du pot, c'est-à-dire celles qui restent en dernier avant la dégradation totale du fond du pot présentent avantageusement la même biodégradabilité que les zones de biodégradabilité majeure de la paroi latérale située sur le bas de celle-ci. Les termes « mineures » et « majeures » sont donc, dans cette réalisation, à rapporter à chaque fois de manière relative, soit au fond du pot, soit à la paroi latérale. Dans d'autres réalisations cependant, la biodégradabilité mineure sera, par exemple celle de la totalité de la paroi latérale alors que la biodégradabilité majeure sera celle de tout le fond du pot. Cela ne nuit pas à la clarté de la protection qui revendique, de manière générique, l'utilisation de biodégradabilités différentielles au sein d'un même pot, cette biodégradabilité pouvant être réparties de diverses manières sur le pot.

Selon une réalisation particulière de l'invention, la paroi latérale comprend des nervures de biodégradabilité mineure s'étendant entre le fond et le haut du pot.

Avantageusement, ces nervures de la paroi latérale sont reliées à des trajets du fond.

De telles nervures de biodégradabilité mineures permettent d'assurer une certaine tenue mécanique du pot horticole, ces nervures pouvant être avantageusement combinées avec des zones cylindriques ou coniques pour faire un squelette sur la paroi latérale du pot. Les racines sont alors autorisées progressivement à sortir par des orifices sur la paroi latérale du pot. Sur une réalisation particulière, le pot étant de section polygonale, les nervures de biodégradabilité mineures se situent au niveau des angles du polygone.

Selon une autre réalisation de l'invention, la paroi latérale comprend des nervures de biodégradabilité majeure s'étendant du fond à une hauteur intermédiaire du pot, ces nervures formant des lignes de dégradation préférentielle.

Avec cette caractéristique, la paroi latérale s'ouvre sur des orifices pratiqués sur le bas de celle-ci en dessous d'une hauteur intermédiaire. Cela permet que le pot ne s'ouvre pas complètement puisque le haut du pot garde son intégrité longtemps. Cela peut être utile, dans la croissance de certains végétaux pour lesquels une ouverture sur le fond du pot peut s'avérer insuffisante ou inadaptée.

Avantageusement, le pot étant de section polygonale, les nervures de biodégradabilité majeures se situent au niveau des angles du polygone.

L'invention concerne également un procédé de fabrication de pots horticoles à biodégradabilité différentielle selon l'une des revendications précédentes et comprenant un fond et une paroi latérale, le procédé comprenant:
- une étape de fabrication d'un moule pour la formation du fond et de la paroi latérale, la partie du moule correspondant au fond ou la partie du moule correspondant à la paroi latérale comprenant au moins deux zones d'épaisseurs différentes, une zone d'épaisseur inférieure adaptée à une dégradation rapide et une zone d'épaisseur supérieure, la forme de la zone d'épaisseur supérieure et sa position sur le moule étant telles que la zone d'épaisseur supérieure assurera la tenue mécanique du pot;
- injection d'un matériau biodégradable dans le moule.

Un tel procédé demande une étape de fabrication du moule plus complexe que celle habituellement réalisée puisque l'injection d'un matériau biodégradable dans le moule doit déboucher sur l'obtention d'un pot horticole ayant deux épaisseurs différentes sur des zones voisines mais distinctes du pot horticole.

En revanche, ce procédé présente l'avantage de ne plus nécessiter aucune autre étape pour la fabrication du pot que celles listées. En outre, l'étape d'injection est particulièrement simple puisqu'un seul et même matériau est injecté dans le moule.

Pour fabriquer un pot selon l'invention, il est aussi possible d'utiliser un procédé de fabrication de pots horticoles à biodégradabilité différentielle selon l'une des revendications précédentes et comprenant un fond et une paroi latérale, le procédé comprenant :
- une étape de fabrication d'un moule pour la formation du fond et de la paroi latérale,
- une étape de bi-injection de deux matériaux de compositions distinctes dans le moule, les deux matériaux étant injectés de telle manière qu'ils se placent dans le moule de manière à constituer des zones de biodégradabilité différentes.

Le moule fabriqué est particulièrement simple car, dans ce cas, tous les types de moules d'épaisseur constante utilisés dans l'art antérieur, peuvent être utilisés. En revanche, les caractéristiques du dispositif d'injection doivent être modifiées de manière importante pour permettre l'injection de deux matériaux de composition distincte dans le même moule.

Un procédé de bi-injection est alors mis en oeuvre. Ce procédé de bi-injection doit assurer que les matériaux injectés se placent dans le moule de manière à constituer les zones de biodégradabilité différentes souhaitées.

Un dernier procédé consiste à injecter séparément un matériau dans un moule pour le fond du pot et un matériau dans un moule pour la paroi latérale. Les moules sont alors de deux épaisseurs distinctes et/ou les deux matériaux injectées séparément sont de compositions différentes. Les deux éléments ainsi moulés séparément sont ensuite rassemblés en les clipsant ou en utilisant tout autre moyen connu de l'homme du métier.

On remarque ici que des épaisseurs différentes et des matériaux différents peuvent parfaitement être utilisés dans un seul et même pot pour fabriquer un pot horticole biodégradable selon l'invention. Celui-ci pourrait donc comporter, à la fois, des zones d'épaisseurs différentes d'un seul et même matériau et des zones réalisées dans un autre matériau, ces zones réalisées dans un autre matériau pouvant être d'épaisseurs égales ou différentes par rapport aux zones réalisées dans le premier matériau.

On comprend bien ici que toute réalisation basée sur les principes de l'invention est ici concernée que ce soit avec des épaisseurs différentes ou avec des matériaux différents.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1A, 1B et 1C présentent respectivement une vue de coté, une coupe et une vue en perspective d'une première réalisation d'un pot horticole selon l'invention,
- les figures 2A, 2B et 2C représentent respectivement une vue de coté, une coupe et une vue en perspective d'un second exemple de réalisation d'un pot horticole selon l'invention,
- les figures 3A, 3B, 3C, 3D et 3E montrent respectivement une vue de coté, une coupe latérale, une coupe médiane, un détail de coupe médiane et une vue en perspective d'une réalisation particulière de l'invention,
- les figures 4A, 4B, 4C et 4D montrent respectivement une vue de coté, une coupe, une vue en perspective et un détail de la coupe d'un mode de réalisation particulier de l'invention,
- les figures 5A, 5B et 5C présentent respectivement une vue de coté, une coupe et une vue en perspective d'un mode de réalisation avantageux de l'invention,
- la figure 6 montre un exemple de forme de fond d'un pot horticole selon l'invention, et
- la figure 7 montre un autre exemple de fond de pot horticole selon l'invention.

### Description détaillée d'un mode de réalisation

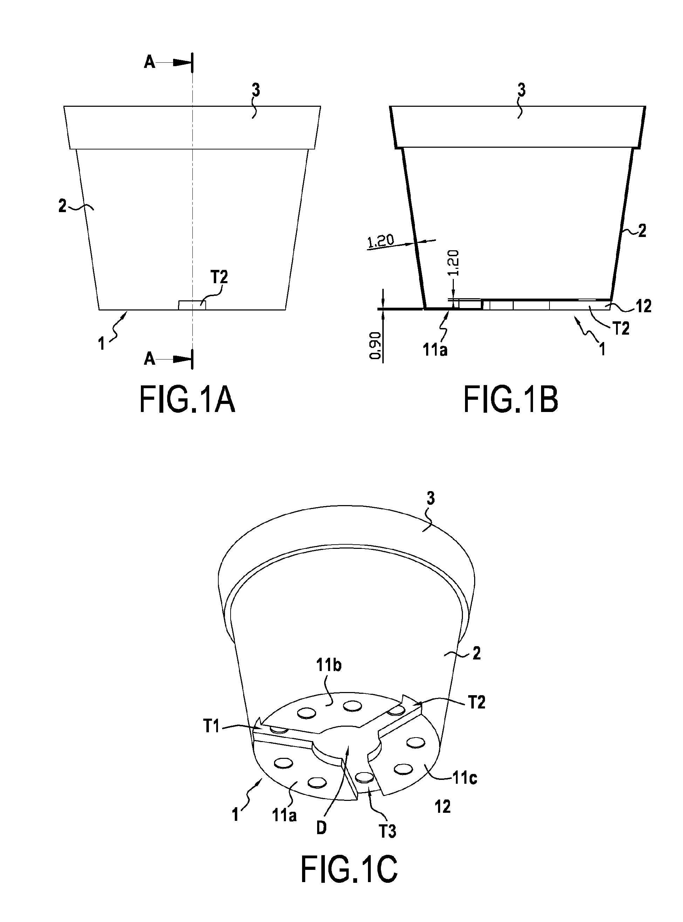

La figure 1 montre un pot réalisé selon l'invention. Ce pot comprend un fond 1 et une paroi latérale 2 terminée par une collerette 3. La présence de la collerette 3 n'est pas indispensable à la réalisation de l'invention mais cette forme est généralement adoptée pour les pots horticoles. Selon l'invention, ce pot est moulé avec un matériau biodégradable, par exemple un polymère biodégradable à base d'amidon de maïs ou de blé ou tout autre type de matériau biodégradable. Le pot peut être également réalisé à partir d'un polymère à base fibres de bois ou de coques de fruits. Diverses charges peuvent être ajoutées pour, soit accélérer le processus de dégradation, soit le freiner, soit encore pour assurer de meilleures propriétés mécaniques au matériau constitutif du pot.

Ainsi que visible sur la figure 1C, le fond du pot comprend des trajets T1, T2 et T3 s'étendant autour d'un disque central D centré sur un point central du fond 1 du pot. Ces trajets permettent un écoulement de l'eau sur le fond du pot alors même que, celui-ci, repose sur trois parties basses du fond du pot notées 11a, 11b et 11c. Ces trois parties font trépied parfaitement stable par contact avec la surface sur laquelle est posé le pot.

Selon l'invention et ainsi que cela est visible sur la figure 1B, les parties basses 11a, 11b et 11c présentent, à dessein, une épaisseur inférieure à l'épaisseur utilisée au niveau des trajets T1, T2 et T3.

Dans le pot représenté sur la figure 1, les parties 11a, 11b et 11c présentent ainsi une épaisseur de 0,9 mm alors que le reste du pot, c'est-à-dire la paroi latérale 2, la collerette 3 et les trajets T1, T2 et T3, présente une épaisseur de 1,2 mm.

Le fait que l'épaisseur des parties basses 11a, 11b et 11c soit inférieure à l'épaisseur des autres parties du pot horticole, engendre le fait que ces parties 11a, 11b et 11c vont se dégrader en premier sous l'action de l'humidité, des ultraviolets, voire des microorganismes présents dans l'environnement pour ouvrir trois orifices dans le pot, ces orifices étant situés sur le bas du pot, ils sont donc adaptés à la croissance des racines.

Une telle dégradation des zones 11a, 11b et 11c du pot est accélérée dès lors que le pot est mis en terre car les conditions qui règnent alors autour du pot sont particulièrement favorables à sa dégradation.

Néanmoins, on sait que cette dégradation peut commencer au moment où le pot est encore sur un étal de jardinerie.

Dans ce cas, la fonction des trajets T1, T2 et T3 qui sont d'une épaisseur plus importante que les parties basses 11a, 11b et 11c est, par leur jonction à la paroi latérale 2 et leur forme en Y, d'assurer une tenue mécanique au pot même si les parties basses 11a, 11b et 11c ont commencé à être dégradées.

En effet, peu de terre tombera grâce au treillis matérialisé par les trajets T1, T2 et T3. En tous cas, le pot ne s'ouvrira pas entièrement par le bas grâce à la présence des trajets T1, T2 et T3 réalisés avec une épaisseur supérieure aux parties basses 11a, 11b et 11c.

Les trajets T1, T2 et T3 sont en outre, bien sûr, fonctionnels pour le processus d'irrigation. Ils sont en effet décalés vers le haut par rapport aux parties basses 11a, 11b et 11c.

En effet, dans le cas où l'irrigation est réalisée par bain dans la jardinerie où le végétal est en vente, ces trajets T1, T2 et T3 permettent d'évacuer l'eau pour éviter que les racines ne baignent dans celle-ci et ne pourrissent.

Un des avantages du pot de la figure 1 est de pouvoir être réalisé avec un seul et unique matériau dans un moule unique, ce moule ayant été conçu de manière à ce que les parties basses 11a, 11b et 11c aient une épaisseur inférieure à l'épaisseur du reste du pot horticole.

En outre, sur l'étal d'une jardinerie, le pot pourra avoir commencé à s'être dégradé au niveau des parties basses 11a, 11b et 11c mais paraître extérieurement intact, ce qui est avantageux pour le processus de vente.

Dans la réalisation présentée sur la figure 1, la paroi latérale 2 est aussi épaisse que les trajets T1, T2 et T3. L'avantage de munir le pot d'une paroi latérale 2 suffisamment épaisse est de permettre que le végétal puisse être cultivé de six à huit mois dans le pot biodégradable.

Ainsi, le pot selon l'invention présente deux épaisseurs distinctes, l'une permettant d'assurer au pot une rigidité et une forme constante et l'autre, permettant d'ouvrir des orifices pour les racines.

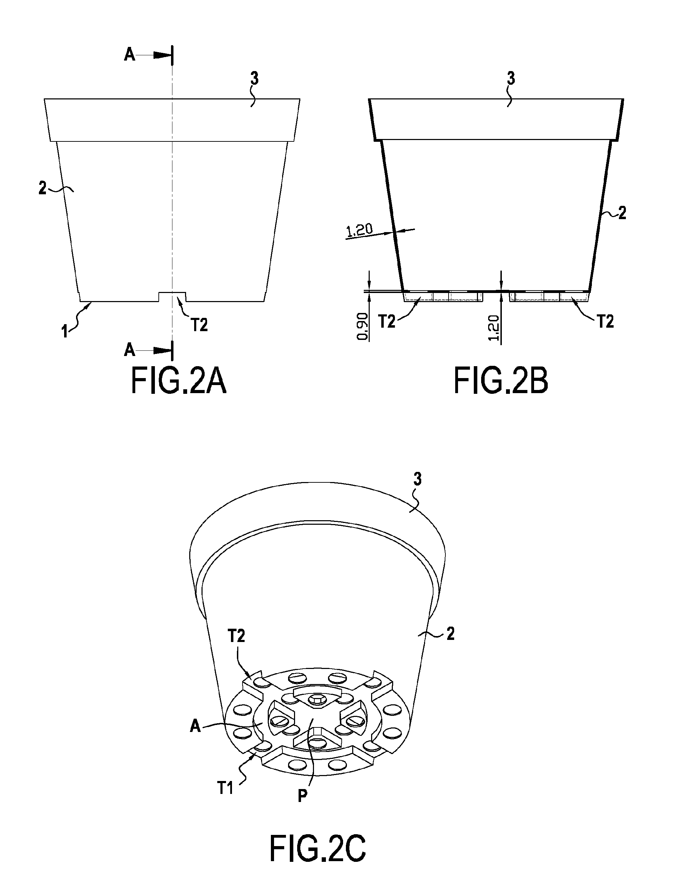

La figure 2 présente un autre exemple de pot réalisé selon l'invention. Dans cette réalisation, des trajets T1 et T2 décalés sur le haut par rapport au fond 1 du pot se croisent en croix au niveau d'un point central noté P. Un chemin annulaire A est ajouté pour entourer le point P. Ce chemin annulaire A permet, non seulement l'évacuation de l'eau de manière correcte, mais également assure un maintien mécanique accru du pot. Il retient en effet la terre qui se trouve dans le pot lors de la dégradation des parties les plus basses du fond du pot.

En effet, ainsi que cela est visible sur la figure 2B et selon les principes de l'invention, le pot est tel que les parties les plus basses du fond du pot, celles qui reposent sur la surface sur laquelle le pot est posé, sont d'une épaisseur inférieure à l'épaisseur du reste du pot.

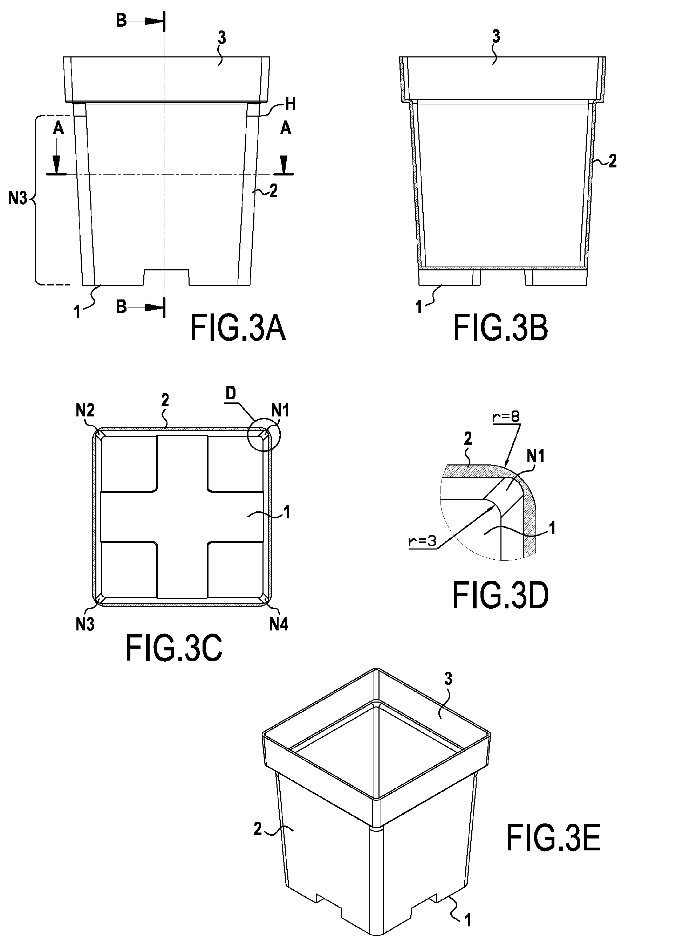

La figure 3 montre une autre réalisation de l'invention. Dans cette réalisation le pot est de section carrée.

Sur la coupe médiane de la figure 3C et le détail de la figure 3D, on remarque que les arêtes du pot sont réalisées de telle manière que la matière présente à chaque coin soit plus fine au niveau des arêtes qu'au niveau des quatre côtés du pot qui constituent la paroi latérale 2. Cela génère quatre nervures notées N1, N2, N3 et N4 aux quatre coins du pot. Ces nervures sont uniquement présentes sous une hauteur intermédiaire notée H sur la figure 3.

Plus précisément, dans l'exemple de la figure 3, la réalisation des nervures est assurée par l'utilisation d'un rayon de courbure égal à 8 mm dans le moule au niveau de la paroi externe du pot et l'utilisation d'un rayon de courbure égal à 3 dans le moule au niveau de la paroi interne du pot.

La figure 3B montre que par ailleurs le reste du pot est réalisé avec la même épaisseur de matière.

On note ici que, éventuellement, les parties basses du fond 1 pourront être réalisées avec une épaisseur inférieure au reste du pot selon le principe montré sur les figures 1 et 2 précédemment décrites.

Néanmoins, cela n'est pas nécessaire. En effet, le moule qui permet de constituer le pot représenté sur la figure 3, est tel que, à partir d'une hauteur H et vers le bas, le pot présente la caractéristique représentée sur les figures 3C et 3D.

Au-dessus de cette hauteur H, le pot est, en revanche, avantageusement réalisé sans que les arêtes ne présentent d'épaisseurs inférieures au reste du pot. Cela permet d'assurer que le pot garde une tenue mécanique correcte.

En revanche, la présence de la diminution d'épaisseur au niveau des arêtes en-dessous de la hauteur H, permet que les racines percent le pot au niveau des arêtes entre le fond du pot et la hauteur H. Les orifices latéraux ainsi obtenus peuvent s'avérer suffisants pour la croissance des racines sans qu'il ne soit nécessaire de prévoir que le pot ne s'ouvre aussi vers le bas au niveau des parties basses du pot même si cela serait avantageux.

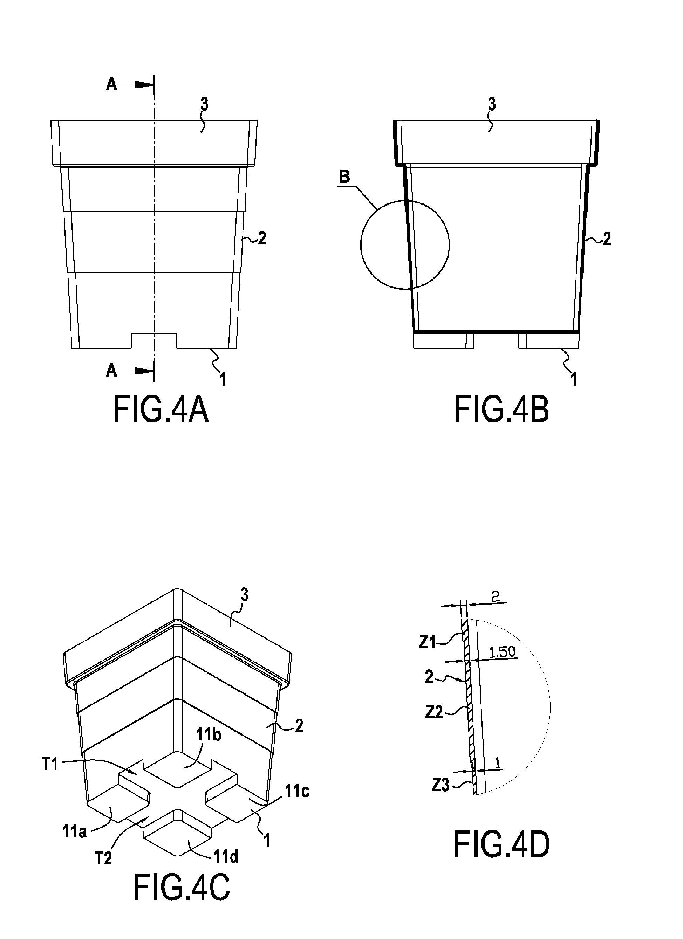

La figure 4 montre une réalisation avantageuse où la paroi latérale présente, comme dans la réalisation de la figure 3A mais de manière différente, des zones d'épaisseurs différentes permettant d'obtenir une biodégradabilité différentielle au niveau de la paroi latérale 2. Ici encore, les zones des parties basses du fond 1 pourront être réalisées dans une épaisseur plus fine que le reste du pot.

La figure 4 montre ainsi un pot réalisé de telle manière que l'épaisseur de la paroi latérale 2 augmente avec la hauteur à partir du fond 1.

Cela est particulièrement visible sur le détail de coupe de la figure 4D où l'on voit bien que le pot comprend des parties coniques d'épaisseurs augmentant avec la hauteur.

La première épaisseur d'une première zone Z1 placée sur le haut du pot présente l'épaisseur la plus importante qui est égale par ailleurs à celle de la collerette 3, une zone Z2 qui présente une épaisseur légèrement inférieure à celle de la zone Z1 et, enfin une zone Z3 qui présente une épaisseur particulièrement fine afin de permettre une bonne biodégradabilité en commençant par le fond 1 du pot.

Ainsi, sur la figure 4A, la zone Z3 présente une épaisseur de 1 mm, la zone Z2, une épaisseur de 1.5 mm et la zone Z1, une épaisseur de 2 mm.

Il sera avantageux que les parties basses 11a, 11b, 11c et 11d du fond 1 soient réalisées, par exemple, avec une épaisseur de 0,9 mm, que la partie haute décalée vers le haut qui constitue des trajets T1 et T2 sur le fond 1 du pot soit réalisée avec une épaisseur de 1 mm qui est égale à l'épaisseur de la zone Z3.

On assure ainsi une dégradation progressive du bas vers le haut du pot.

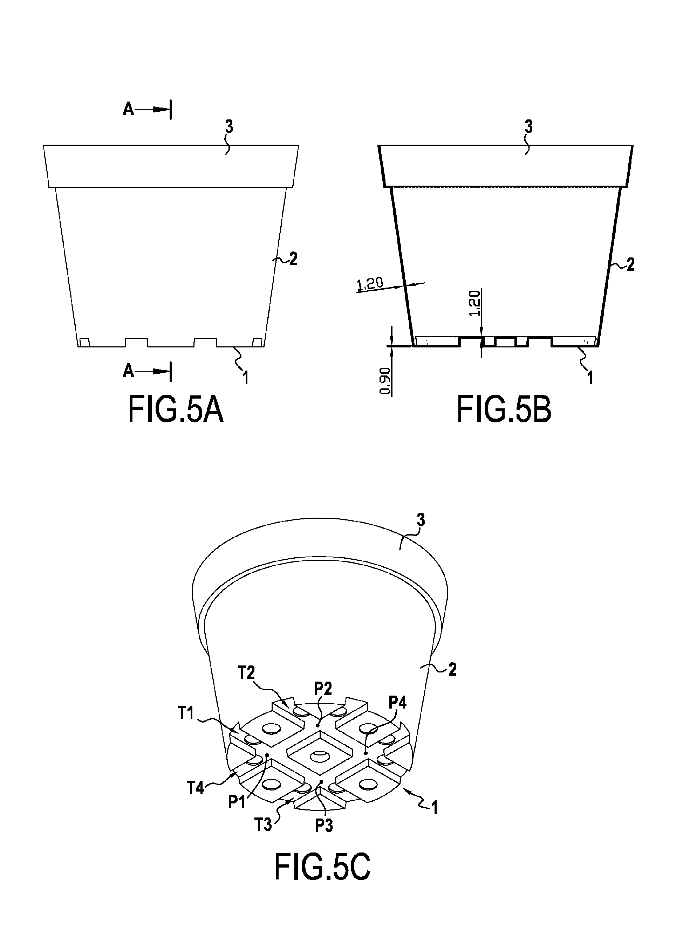

La figure 5 montre un exemple comparable à ceux des figures 1 et 2 mais où le fond 1 du pot comprend une structure en grille qui s'étend sur quatre trajets T1, T2, T3, T4 qui s'intersectent en quatre points P1, P2, P3 et P4.

Les parties qui sont les plus basses du fond sont celles qui sont les plus fines, tel que cela est visible sur la coupe de la figure 5B.

Une telle réalisation en grille du fond du pot 1 permet d'obtenir une bonne tenue mécanique du pot dans sa globalité et d'assurer une bonne conservation de la terre à l'intérieur du pot.

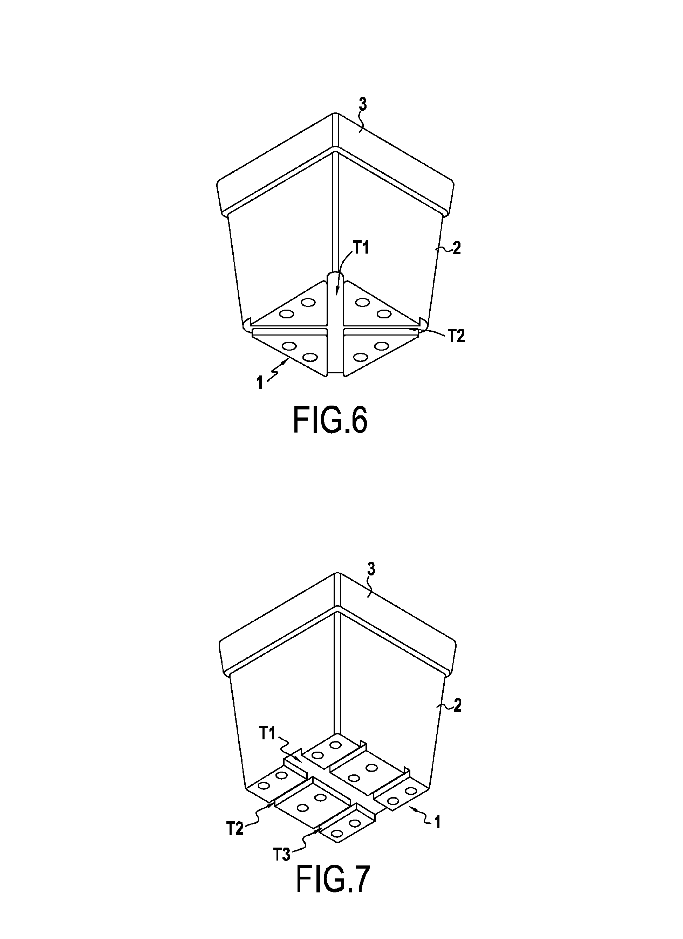

Les figures 6 et 7 montrent deux autres exemples de formes de trajets respectivement T1 et T2 et T1, T2 et T3, pratiqués sur le fond 1 du pot pour la mise en ouvre de l'invention.

On comprend ici que les trajets sur le fond du pot présentent, bien sûr, une épaisseur supérieure à celle observée sur les parties les plus basses du fond 1 des pots présentés.

Enfin, on remarque que diverses mises en oeuvre peuvent être réalisées selon les principes de l'invention. En particulier, toute forme de trajets pourra être réalisée sous le pot pour assurer la tenue mécanique de celui-ci. Ces zones d'épaisseur plus importante que les parties les plus basses du pot pourront prendre toutes les formes qui permettent de conserver une bonne tenue mécanique au pot.

De manière semblable, tout type de zones à biodégradabilité majeure, susceptible d'ouvrir des orifices sur la partie basse du pot, que ce soit sous une hauteur intermédiaire de la paroi latérale ou sur le fond du pot lui-même, sont des réalisations couvertes par l'invention.

On note aussi que les trajets sous le pot pourront être réalisés dans un premier matériau alors que les parties basses du fond du pot pourront être réalisées dans un autre matériau plus biodégradable que le matériau utilisé pour, typiquement, la paroi latérale et les trajets décalés vers le haut sur le fond du pot.

Il est aussi envisagé de réaliser le fond du pot à partir d'un premier matériau présentant une biodégradabilité majeure, la paroi latérale du pot étant réalisée avec un matériau à biodégradabilité mineure. Une telle réalisation permettrait d'ouvrir complètement le fond du pot alors même que le pot garderait, sur sa paroi latérale, un aspect d'intégrité.

Une telle réalisation peut être réalisée à partir d'un procédé de bi-injection où un premier matériau à biodégradabilité majeure est injecté au niveau du fond du pot alors qu'au niveau du haut du pot, un matériau de biodégradabilité mineure est injecté successivement ou en même temps.

Il est aussi envisagé de réaliser le fond du pot d'un côté et la paroi latérale de l'autre à partir de deux matériaux de compositions distinctes et de rassembler ces deux éléments en un seul pot, par exemple, par clipsage.

## Revendications

1. Pot horticole à biodégradabilité différentielle comprenant un fond (1) et une paroi latérale (2), le pot comprenant au moins deux zones à capacité de biodégradabilité différentes, une zone dite de biodégradabilité majeure (11a,11b,11c) et une zone de biodégradabilité mineure (T1,T2,T3), la forme et la situation de la zone de biodégradabilité majeure (11a,11b,11c) sur le pot étant telles que la zone de biodégradabilité majeure (11a,11b,11c) constitue, après dégradation, un ou plusieurs orifices ouverts dans le pot, la situation de ces orifices par rapport au pot étant adaptée à la croissance des racines et la forme et la situation de la zone de biodégradabilité mineure (T1,T2,T3) sur le pot étant telles que la zone de biodégradabilité mineure (T1,T2,T3) assure la tenue mécanique du pot après dégradation de la zone de biodégradabilité majeure (11a,11b,11c).

2. Pot selon la revendication 1, **caractérisé en ce que** les zones de biodégradabilités différentes sont différenciées par des matériaux de compositions biodégradables distinctes.

3. Pot selon la revendication 1, **caractérisé en ce que** les zones de biodégradabilités différentes sont différenciées par des épaisseurs différentes d'un même matériau biodégradable, la zone de biodégradabilité majeure (11a,11b,11c) présentant alors une épaisseur moins importante que la zone de biodégradabilité mineure (T1,T2,T3).

4. Pot horticole selon l'une des revendications 1 à 3, **caractérisé en ce que** la paroi latérale est une zone de biodégradabilité mineure.

5. Pot horticole selon l'une des revendications 1 à 4, **caractérisé en ce que** le fond (1) comprend au moins deux zones de biodégradabilités différentes, la forme de la zone de biodégradabilité mineure (T1,T2,T3) sur le fond (1) du pot et ses liaisons avec la paroi latérale (2) assurant la tenue mécanique du pot.

6. Pot horticole selon la revendication 5, **caractérisé en ce que** la zone de biodégradabilité mineure (T1,T2,T3) est en outre décalée au dessus de la zone de biodégradabilité majeure (11a,11b,11c) pour former des trajets d'écoulement de l'eau au niveau du fond (1) du pot.

7. Pot horticole selon l'une des revendications 5 et 6, **caractérisé en ce que** la zone de biodégradabilité mineure comprend plusieurs trajets (T1,T2,T3) en croix ou en étoiles autour d'au moins un point central (P), ces trajets (T1,T2,T3) s'étendant entre le point central (P) et la paroi latérale (2).

8. Pot horticole selon la revendication 7, **caractérisé en ce que** la zone de biodégradabilité mineure comprend en outre un disque (D) autour du point central.

9. Pot horticole selon l'une des revendications 7 et 8, **caractérisé en ce que**, le point central (P) étant unique, la zone de biodégradabilité mineure comprend en outre une portion annulaire (A) intersectant les trajets (T1,T2,T3) et entourant le point central (P).

10. Pot horticole selon la revendication 7, **caractérisé en ce que** la zone de biodégradabilité mineure comprend plusieurs points centraux (P1,P2,P3 et P4) reliés par des trajets (T1,T2,T3) formant une structure en grille reliée à la paroi latérale (2).

11. Pot horticole selon l'une des revendications précédentes, **caractérisé en ce que** la paroi latérale (2) comprend au moins deux zones de biodégradabilités différentes, la forme de la zone de biodégradabilité mineure et ses liaisons par rapport au fond (1) étant telles que la zone de biodégradabilité mineure assure la tenue mécanique du pot.

12. Pot horticole selon la revendication 11, **caractérisé en ce qu'**il comprend plusieurs zones (Z1,Z2,Z3) sensiblement cylindriques ou coniques successives, ces zones (Z1,Z2,Z3) étant de biodégradabilités différentes et formant la paroi latérale (2).

13. Pot horticole selon la revendication 12, **caractérisé en ce que** la biodégradabilité des zones (Z1,Z2,Z3) diminue du fond (1) vers le haut du pot.

14. Pot horticole selon la revendication 11, **caractérisé en ce que** la paroi latérale comprend des nervures (N1,N2,N3 et N4) de biodégradabilité majeure s'étendant du fond (1) à une hauteur intermédiaire (H) de la paroi latérale du pot, ces nervures (N1,N2,N3 et N4) formant des lignes de dégradation préférentielle.

15. Pot horticole selon la revendication 14, **caractérisé en ce que** le pot étant de section polygonale, les nervures (N1,N2,N3 et N4) de biodégradabilité mineure se situent au niveau des angles du polygone.
